# EUROPÄISCHE PATENTANMELDUNG

(11) **EP 2 639 537 A2**
(43) Veröffentlichungstag der Anmeldung: **18.09.2013**
(21) Anmeldenummer: 13155931.2
(22) Anmeldetag: 20.02.2013
(51) Int. Cl.: F27D 11/12, F27B 5/06, F27B 5/10, F27D 1/18, F27B 17/02, F27D 99/00

(54) **Ofen mit feuerfestem Einsatz**

(30) Priorität: 16.03.2012 DE 202012002756 U; 02.04.2012 DE 202012003380 U
(71) Anmelder: MWT Mikrowellen Labor Technik AG, 9435 Heerbrug (CH)
(72) Erfinder: Lautenschläger, Werner, 9435 Heerbrug (CH); Lautenschläger, Jens, 9435 Heerbrug (CH)
(74) Vertreter: Kiwit, Benedikt

(57) **Zusammenfassung**

Die vorliegende Erfindung betrifft einen Mikrowellenofen (1) mit feuerfestem und Mikrowellendurchlässigem Muffelofeneinsatz (2), aufweisend einen Mikrowellenraum (10), in welchem der einen Probenraum (20) umgebende Muffelofeneinsatz (2) vorgesehen ist, eine Vorrichtung zum Einkoppeln von Mikrowellen in den Mikrowellenraum (10), und eine Ofentür (11) zum Verschließen des Mikrowellenraums (10), welche zwischen einer eine Ofenöffnung (13) des Mikrowellenraums (10) verschließenden Betriebsposition und einer die Ofenöffnung (13) freigebenden Öffnungsposition bewegbar ist, wobei eine Muffelofentür (3) derart mit der Ofentür (11) vorzugsweise elastisch verbunden ist, dass die Muffelofentür (3) eine Probenraumöffnung (22) des Muffelofeneinsatzes (2) in der Betriebsposition der Ofentür (11) vorzugsweise elastisch in Richtung des Muffelofeneinsatzes (2) vorgespannt dicht verschließt und in der Öffnungsposition der Ofentür (11) freigibt. Die Erfindung ist ferner auf einen Ofen (1) mit feuerfestem Einsatz (2) sowie einem Ofenraum (10), einer Heizvorrichtung, einer Ofentür (11) und einer Probenraumtür (13) gerichtet, wobei die Probenraumtür (3) mit der Ofentür (11) vorzugsweise elastisch verbunden ist und wobei sich von der Probenraumtür (3) weg eine verjüngende Zentriererhebung (36) erstrecken kann.

## Beschreibung

Die vorliegende Erfindung betrifft einen Ofen, vorzugsweise einen Mikrowellenofen, mit einem feuerfesten Einsatz, vorzugsweise einem Muffelofeneinsatz bzw. Muffel.

Aus dem Stand der Technik sind Muffelöfen bekannt. In einem Muffelofen sind die Heizvorrichtung zum erwärmen der Proben sowie der Probenraum durch einen feuerfesten und hitzebeständigen Einsatz, dem sogenannten Muffel, voneinander getrennt. Die Muffeln dienen dazu, die Proben zu erhitzen und vor Flammen oder direkter Heizstrahlung zu schützen oder um die Heizvorrichtung vor Gasen zu schützen, die während der Behandlung der Probe entstehen.

Üblicherweise werden thermische Heizsysteme (elektrische Widerstandselemente) als Heizvorrichtung verwendet, um die Proben zu erwärmen. Es ist jedoch auch bekannt, Mikrowellen zum Erwärmen der Proben in Muffelöfen zu verwenden. In diesem Fall weist der Muffelofen einen (herkömmlichen) Mikrowellenofen auf, welcher über ein Magnetron erzeugte Mikrowellen über eine Koppelöffnung in den Mikrowellenraum leitet und Proben direkt und oder indirekt über "Mikrowellen-absorbierende Heizelemente" erwärmt.

Der feuerfeste Einsatz ist in dem Ofenraum vorgesehen und umschließt den Probenraum, welcher zu einer Tür des Ofens hin eine verschließbare Öffnung aufweist. Die Öffnung dient dem Hineinsetzen von Proben in und dem Herausnehmen derselben aus dem Probenraum. Üblicherweise wird in diese Öffnung ein die Öffnung ausfüllender Einsatz eingefügt, welcher die Öffnung für die Behandlung der Probe verschließen und somit einen rundherum geschlossenen Probenraum bildet. Der Ofen bzw. Mikrowellenofen wird schließlich durch eine Ofentür verschlossen.

Bei Hochtemperatur-Anwendungen (über 300°C bis ca. 1.600°C), bspw. in Mikrowellen, stellt das dichte Schließen und das Öffnen der Muffelofentür ein Problem dar. So muss die Muffelofentür zunächst aus der Öffnung herausgenommen und dann separat auf der bereits geöffneten Ofentür oder neben dem Ofen oder auf einer eigens dafür vorgesehene Ablage gelegt werden. Zum einen besteht hierbei die Gefahr, die erhitzte Muffelofentür fallen zu lassen und/oder zu beschädigen. Zudem erfordert das genaue Einpassen der zum Teil schweren Muffelofentür in die Probenraumöffnung einen schwierigen, zeitraubenden Aufwand. So kann es zu einem großen Wärmeverlust kommen, wenn das Herausnehmen und Einsetzen der Muffelofentür während des Betriebes viel Zeit in Anspruch nimmt, was insbesondere bei Schmelzaufschlüssen sehr nachteilig ist, da die Proben wieder erstarren können. Des Weiteren wird das analytische Arbeiten durch das Tragen von Isolationshandschuhen erschwert.

Das Einsetzen der Muffelofentür in die Probenraumöffnung führt bei der manuellen Handhabung zudem zu Reibungen und Stößen der beiden Teile aneinander, was zu Pulverabrieb und folglich einem Verschleiß des feuerfesten Einsatzes samt Tür führt. Sowohl durch den Verschleiß durch Abrieb als auch durch Verzug des Materials können undichten Stellen (Spalten) auftreten. Durch diese Spalten treten Pyrolysegas aus und führen zu Schwarz-Färbungen durch Kohlenstoff-Bildung (Ruß) und Kondensation von Pyrolyse-Produkten die zu einem schnelleren Verschleiß und auch zu Störungen oder Verfälschungen der Probenreaktion führen können.

Um die Handhabung der Muffelofentür zu verbessern ist es aus dem Stand der Technik bereits bekannt, die Muffelofentür an der Ofentür derart zu fixieren, dass bei Schließen der Ofentür gleichzeitig die Muffelofentür die Probenraumöffnung verschließt. Somit muss die Muffelofentür nicht mehr separat gehandhabt werden. Nachteilig an den bekannten Öfen ist jedoch, dass die Muffelofentür sehr genau an der Ofentür vorgesehen werden muss, um ein genaues Einpassen derselben in die Probenraumöffnung bzw. Abdecken der Probenraumöffnung zu gewährleisten. Zudem ist der Abstand zwischen der verschlossenen Ofentür und der Probenraumöffnung konstant, so dass ein Verschleiß der Muffelofentür zu Spalten zwischen dieser und dem Einsatz führt, die letztlich einen regelmäßigen Austausch der gesamten Muffelofentür und vielfach des gesamten Muffelofens erfordern, was nicht nur zeit- sondern auch kostenaufwändig ist.

Es ist somit eine Aufgabe der Erfindung einen Ofen mit feuerfestem Einsatz bereitzustellen, vorzugsweise einen Mikrowellen-(Muffel-)Ofen, der eine einfache Handhabung einer Probenraumtür bzw. Muffelofentür sowie ein sicheres und dichtes Verschließen des Probenraumes über mehrere Behandlungszyklen hinweg ermöglicht.

Diese Aufgabe wird durch den Gegenstand der unabhängigen Ansprüche gelöst. Die abhängigen Ansprüche bilden den zentralen Gedanken der Erfindung in besonders vorteilhafter Weise weiter.

Gemäß einem ersten Aspekt betrifft die Erfindung einen Mikrowellenofen mit feuerfestem und Mikrowellen-durchlässigem Muffelofeneinsatz. Der Mikrowellenofen weist einen Mikrowellenraum, in welchem der Muffelofeneinsatz vorgesehen ist, eine Vorrichtung zum Einkoppeln von Mikrowellen in den Mikrowellenraum, und eine Ofentür zum Verschließen des Mikrowellenraums auf. Die Ofentür ist zwischen einer eine Ofenöffnung des Mikrowellenraums verschließenden Betriebsposition und einer die Ofenöffnung freigebenden Öffnungsposition bewegbar. Der Muffelofeneinsatz umgibt ferner einen Probenraum, welcher zur Ofenöffnung (bzw. zur Ofentür in der Betriebsposition) hin gerichtet eine Probenraumöffnung aufweist. Eine Muffelofentür ist derart mit der Ofentür vorzugsweise elastisch verbunden, dass die Muffelofentür die Probenraumöffnung des Muffelofeneinsatzes wenigstens in der Betriebsposition der Ofentür vorzugsweise elastisch in Richtung des Muffelofeneinsatzes vorgespannt dicht verschließt und in der Öffnungsposition der Ofentür freigibt.

Da die Muffelofentür mit der Ofentür verbunden und zudem in Richtung des Muffelofeneinsatzes vorgespannt ist, wenigstens in der Betriebsposition der Ofentür, kann durch die vorgespannte Anlage der Muffelofentür mit dem Muffelofeneinsatz die Probenraumöffnung beim Schließen der Ofentür ebenfalls und gleichzeitig dicht angepresst und somit verschlossen werden. Dadurch kann ein permanent sicherer Verschluss der Probenraumöffnung während des Betriebs des Mikrowellenofens gewährleistet werden. Hierzu ist die Muffelofentür vorzugsweise elastisch mit der Ofentür verbunden und folglich auch elastisch vorgespannt.

Es ist weiter sehr wichtig, dass die Ofentür bei Mikrowellengeräten exakt und zuverlässig schließt und somit einen dichten Faradayschen Käfig bildet. Auch dies wird durch die erfindungsgemäße Ausgestaltung des Mikrowellenofens sicher erreicht.

Durch das gleichzeitige Schließen der Ofentür zusammen mit der Muffelofentür kann zudem erreicht werden, dass der Anwender beim Öffnen des Mikrowellenofens nur eine Hand benötigt, während er mit der anderen Hand direkt die Proben entnehmen/ einstellen und so das System schnell wieder verschließen kann. Trotz der mit der Ofentür verbundenen Muffelofentür kann ein Verschleiß der Muffelofentür bzw. des Muffelofeneinsatzes aufgrund der vorgespannten und vorzugsweise elastischen Anlage der Muffelofentür gegenüber dem Muffelofeneinsatz weitgehend verhindert und zudem der Muffelofeneinsatz stets dicht verschlossen werden.

Zudem können durch die Verbindung der beiden Türen diese mit nur einem Handgriff, welcher außen an der Ofentür vorgesehen ist und somit auch ohne Handschuhe bedient werden kann, gleichzeitig geöffnet und geschlossen werden. Dadurch bleibt stets eine Hand des Anwenders für die Bearbeitung und Entnahme der Proben (bspw. Tiegel, Gefäße etc.) frei.

Im Rahmen der Erfindung wird unter dem Begriff "dicht" bzw. "dicht verschlossen" verstanden, dass ein möglichst spaltfreier Kontakt zwischen den beteiligten Bauteilen bestehen soll, der eine räumliche Trennung des Probenraumes und des Mikrowellenraumes zur Folge hat. Da sich eventuelle (minimale) Spalte aufgrund des spröden, weichen und porösen Materials des Muffelofeneinsatzes nicht ganz vermeiden lassen bzw. entstehen können, kann auch ein eventuelles (minimales) Entweichen von Gasen als dicht angesehen werden, solange eine grundsätzlich räumliche Trennung vorliegt und der Probenraum in der Betriebsposition der Ofentür im Wesentlichen geschlossen ist. Da der Probenraum zum Entfernen der Verbrennungsgase in der Regel stets abgesaugt wird und somit ein Unterdruck entsteht, ist das Austreten von Gasen jedoch praktisch zu vernachlässigen.

Vorzugsweise ist ein Profilelement an der in Betriebsposition dem Mikrowellenraum zugewandten Seite der Ofentür vorgesehen, um die Muffelofentür vorzugsweise lose aufzunehmen. Mittels eines Profilelements wird eine einfache Struktur bereitgestellt, welche die Muffelofentür sicher aufnimmt. Das Profilelement kann dabei beliebig ausgebildet sein, solange es eine sichere Aufnahme und Positionierung der Muffelofentür an der Ofentür gewährleistet. Ist die Muffelofentür zudem lose in dem Profilelement vorgesehen, wobei hierunter insbesondere ein Spiel in seitlicher Richtung bezüglich der Muffelofentür gemeint ist (in Richtung des Muffelofeneinsatzes ist die Muffelofentür vorzugsweise vorgespannt), so kann die Muffelofentür eventuell bezüglich der Probenraumöffnung leicht seitlich bewegt werden, um die Muffelofentür bezüglich der Probenraumöffnung für eine dichte Anlage auszurichten. Dadurch wird eine automatische Anpassung der Ofentür zum Muffelofeneinsatz gewährleistet. Das erfolgt automatisch beim Einbau und beim ersten Verschluss der Ofentür (bzw. Mikrowellentür).

Das Profilelement kann wenigstens eine sich seitlich von der Muffelofentür erstreckende Anlagefläche hintergreifen. Vorzugsweise ist das Profilelement derart ausgebildet ist, dass es in wenigstens eine laterale oder wenigstens teilweise umlaufende, seitlich Nut der Muffelofentür eingreift. Hintergreift das Profilelement eine Anlagefläche der Muffelofentür oder greift das Profilelement gar in eine Nut der Muffelofentür ein, so kann die Muffelofentür zwar seitlich auf oder in das Profilelement eingeschoben werden, jedoch in Schließrichtung gesehen nicht herausfallen. Vorzugsweise weist das Profilelement eine C-Profilform auf, so dass sie von wenigstens zwei Seiten die Muffelofentür umgreift. Besonders vorzugsweise ist die C-Profilform an einer ihrer beiden offenen Seiten zudem geschlossen ausgebildet, um zwar ein sicheres Einführen der Muffelofentür in das Profilelement über die noch offene Seite zu ermöglichen, darüber hinaus die Muffelofentür jedoch sicher aufzunehmen.

Zwischen der Ofentür und der Muffelofentür können Vorspannelemente angeordnet sein, um die Muffelofentür in der Betriebsposition in Richtung des Muffelofeneinsatzes vorzuspannen. Die Vorspannelemente können hierzu zwischen der Ofentür und der Muffelofentür in dem Profilelement angeordnet sein, so dass die Muffelofentür in der Öffnungsposition der Ofentür entgegen dem Profilelement vorgespannt ist. So wird die Muffelofentür auch in einer Öffnungsposition der Ofentür sicher in dem Profilelement gehalten. Wird die Ofentür geschlossen und die Muffelofentür somit in Anlage an den Muffelofeneinsatz gebracht, so werden die Vorspannelemente weiter vorgespannt, automatisch angepasst (justiert) und die Muffelofentür somit fest gegen den Muffelofeneinsatz gedrückt. Selbst bei Abrieb der Muffelofenkomponenten (Muffelofentür; Muffelofeneinsatz) bleibt der Probenraum in Betriebsposition somit auch nach zahlreichen Behandlungszyklen in fester Anlage und der Probenraum wird folglich stets dicht verschlossen.

Die Vorspannelemente weisen vorzugsweise Federn oder Gummielementen, besonders vorzugsweise Silikon-Gummi-Elemente, auf. Diese Vorspannelemente ermöglichen ein elastisches Vorspannen der Muffelofentür. Beim Schließen der Ofentür wird die Muffelofentür somit federnd an den Muffelofeneinsatz gedrückt. Durch Kompression der elastischen Vorspannelemente wird der Anpressdruck der Muffelofentür gegenüber dem Muffelofeneinsatz in der Betriebsposition stetig und sicher aufrechterhalten, so dass der Probenraum auch nach mehreren Behandlungszyklen noch sicher und dicht verschlossen werden kann. Das gilt selbst bei leichter Schräglage der planen Dichtflächen.

Von der der Ofentür abgewandten Seite der Muffelofentür erstreckt sich vorzugsweise eine sich von der Muffelofentür weg verjüngende Zentriererhebung, die derart ausgebildet ist, dass sie in der Betriebsposition in die Probenraumöffnung eingreift um die Muffelofentür beim Schließen des Muffelofeneinsatz bezüglich des Muffelofeneinsatz zu zentrieren und vorzugsweise relativ zum Profilelement seitlich zu bewegen. Die Zentriererhebung weist hierzu vorzugsweise eine mit der Probenraumöffnung korrespondierende Kontur bzw. eine(n) mit der Probenraumöffnung korrespondierende(n) Querschnitt (sform) auf. Die Zentriererhebung kann besonders vorzugsweise eine kegelstumpfförmige oder pyramidenstumpfförmige Form aufweisen. Durch die sich verjüngende Form der Zentriererhebung bildet diese eine sichere Führung der Muffelofentür, um diese seitlich zu der Probenraumöffnung auszurichten und zu zentrieren. Somit kann der Abrieb der Muffelofenkomponenten erheblich reduziert werden gegenüber einer Lösung, in der die Muffelofentür in die Probenraumöffnung eingesetzt wird und/oder die Probenraumöffnung starr an der Ofentür angebracht ist. Je mehr die Konturen bzw. der Querschnitt der Probenraumöffnung und der Zentriererhebung (wenigstens in einem Fußbereich der Zentriererhebung) übereinstimmen, desto genauer kann eine Zentrierung der Muffelofentür vorgenommen werden.

Die Muffelofentür weist zum Verschließen der Probenraumöffnung eine die Probenraumöffnung in Betriebsposition seitlich umgebende vorzugsweise plane Anlagefläche auf, welche in der Betriebsposition mit einer der Ofenöffnung zugewandten und vorzugsweise planen Anlagefläche des Muffelofeneinsatzes vorzugsweise dichtend zusammenwirkt. Die Anlageflächen sorgen somit in Anlage miteinander zu einer die Probenraumöffnung vollständig umgebenden Kontaktfläche, so dass die Probenraumöffnung über eine große Fläche nach außen abgeschlossen ist.

Gemäß einem zweiten Aspekt betrifft die Erfindung einen Mikrowellenofen mit feuerfestem und Mikrowellen-durchlässigem Muffelofeneinsatz, aufweisend: einen Mikrowellenraum, in welchem der einen Probenraum umgebende Muffelofeneinsatz vorgesehen ist, eine Vorrichtung zum Einkoppeln von Mikrowellen in den Mikrowellenraum, und eine Ofentür zum Verschließen des Mikrowellenraums, welche zwischen einer eine Ofenöffnung des Mikrowellenraums verschließenden Betriebsposition und einer die Ofenöffnung freigebenden Öffnungsposition bewegbar ist, wobei eine Muffelofentür derart mit der Ofentür vorzugsweise elastisch verbunden ist, dass die Muffelofentür eine Probenraumöffnung des Muffelofeneinsatzes in der Betriebsposition der Ofentür verschließt und in der Öffnungsposition der Ofentür freigibt. Das Verschließen geschieht somit vorzugsweise elastisch, so dass die Muffelofentür in der Betriebsposition der Ofentür entgegen bzw. gegenüber dem Muffelofeneinsatz vorgespannt ist und somit den Probenraum sicher und dicht verschließt.

Durch die gemeinsame Ausgestaltung der beiden Türen bei einem Mikrowellen-Muffel-Ofen wird es ermöglicht, dass der Anwender die Muffelofentür ohne Berührung derselben und gleichzeitig mit dem Öffnen der Ofentür bedienen kann. Somit hat der Anwender weiterhin eine Hand zum Handling der Proben frei. Der Mikrowellenofen gemäß dem zweiten Aspekt ist selbstverständlich mit allen Merkmalen des Mikrowellenofens gemäß dem ersten Aspekt kombinierbar.

Die Erfindung ist jedoch nicht auf einen Mikrowellenofen mit Muffelofeneinsatz beschränkt. Grundsätzlich umfasst die Erfindung alle bekannten Öfen mit feuerfestem Einsatz. Anstelle der Vorrichtung zum Einkoppeln von Mikrowellen können dann auch andere Heizelemente verwendet werden. Der feuerfeste Einsatz muss dann nicht mehr zwingend Mikrowellen-durchlässig sein. Der Mikrowellenraum ist dann allgemein als Ofenraum zu bezeichnen.

So betrifft die Erfindung gemäß einem dritten Aspekt einen Ofen mit feuerfestem Einsatz. Der Ofen weist einen Ofenraum, in welchem der Einsatz vorgesehen ist, eine Heizvorrichtung, und eine Ofentür zum Verschließen des Ofenraumes auf. Die Ofentür ist zwischen einer eine Ofenöffnung des Ofenraums verschließenden Betriebsposition und einer die Ofenöffnung freigebenden Öffnungsposition bewegbar. Der Einsatz umgibt einen Probenraum, welcher zur Ofenöffnung hin gerichtet eine Probenraumöffnung aufweist. Eine feuerfeste Probenraumtür ist ferner derart mit der Ofentür verbunden, dass die Probenraumtür die Probenraumöffnung des Einsatzes in der Betriebsposition der Ofentür verschließt und in der Öffnungsposition der Ofentür freigibt. Die Probenraumtür ist derart mit der Ofentür vorzugsweise elastisch verbunden, dass die Probenraumtür von der Ofentür weg und in der Betriebsposition vorzugsweise elastisch in Richtung des Einsatzes vorgespannt ist, um die Probenraumöffnung des Einsatzes in der Betriebsposition der Ofentür dicht zu verschließen.

Bezüglich der Vorteile der erfindungsgemäßen vorgespannten Ausbildung der Probenraumtür zum dichten Verschließen der Probenraumöffnung wenigstens in einer Betriebsposition der Ofentür wird auf obige Ausführungen verwiesen.

Gemäß einem vierten Aspekt betrifft die Erfindung einen Ofen mit feuerfestem Einsatz. Der Ofen weist einen Ofenraum, in welchem der Einsatz vorgesehen ist, eine Heizvorrichtung, und eine Ofentür zum Verschließen des Ofenraumes auf. Die Ofentür ist zwischen einer eine Ofenöffnung des Ofenraums verschließenden Betriebsposition und einer die Ofenöffnung freigebenden Öffnungsposition bewegbar. Der Einsatz umgibt einen Probenraum, welcher zur Ofenöffnung hin gerichtet eine Probenraumöffnung aufweist. Eine Probenraumtür ist derart mit der Ofentür verbunden, dass die Probenraumtür die Probenraumöffnung des Einsatzes in der Betriebsposition der Ofentür verschließt und in der Öffnungsposition der Ofentür freigibt. Vorzugsweise weist die Probenraumtür eine die Probenraumöffnung seitlich umgebende Anlagefläche auf. Diese Anlagefläche steht in der Betriebsposition folglich einer die Probenraumöffnung umschließenden Anlagefläche des Einsatzes in Anlage gegenüber. Ferner vorzugsweise ist ein Profilelement an der in Betriebsposition dem Ofenraum zugewandten Seite der Ofentür vorgesehen, um die Probenraumtür vorzugsweise lose - also in seitlicher Richtung lose bzw. mit Spiel bewegbar - aufzunehmen. Von der der Ofentür abgewandten Seite der Probenraumtür erstreckt sich eine sich von der Probenraumtür weg verjüngende Zentriererhebung, die derart ausgebildet ist, dass sie in der Betriebsposition in die Probenraumöffnung eingreift, um die Probenraumtür beim Schließen des Einsatzes bezüglich des Einsatzes und relativ zum Profilelement zu zentrieren.

Auch der Gegenstand der Erfindung gemäß dem dritten und vierten Aspekt der Erfindung kann in beliebiger Weise mit den vorgenannten Merkmalen bezüglich des ersten oder zweiten Aspekts kombiniert werden. Wahlweise kann der Ofen als Mikrowellenofen und/oder der feuerfeste Einsatz als (Mikrowellen-durchlässiger) Muffelofeneinsatz ausgebildet sein.

Weitere Ausgestaltungen und Vorteile der Erfindung werden im Folgenden anhand von einem Ausführungsbeispiel im Zusammenhang mit den Figuren der begleitenden Zeichnungen beschrieben.
- Figur 1: zeigt eine perspektivische Ansicht eines erfindungsgemäßen Ofens mit feuerfestem Einsatz in einer Öffnungsposition, und
- Figur 2: zeigt eine Schnittansicht des erfindungsgemäßen Ofens gemäß Figur 1 in einer Betriebsposition.

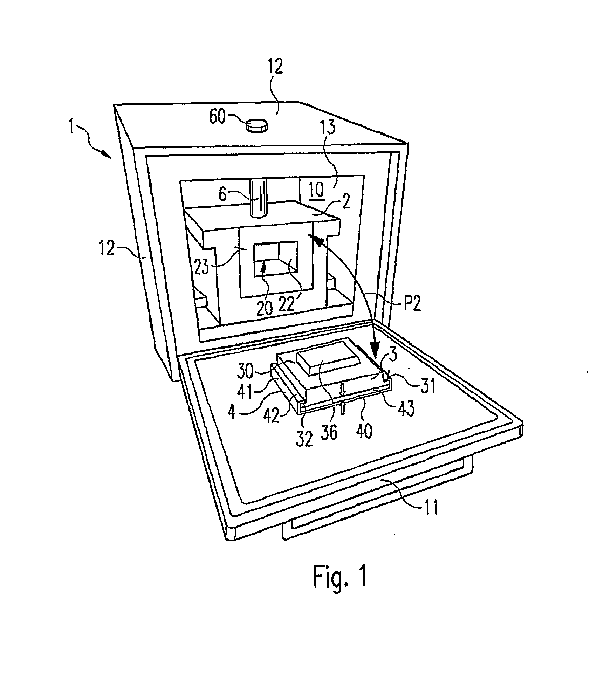

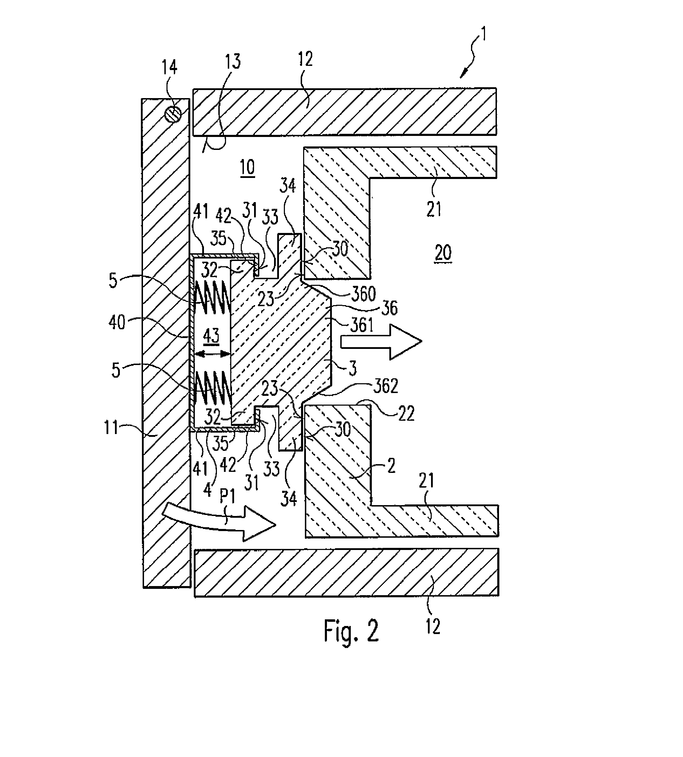

Figuren 1 und 2 zeigen einen Ofen 1, genauer einen Mikrowellenofen mit einem feuerfesten Einsatz 2, genauer einem Muffelofeneinsatz bzw. Muffel.

Der Mikrowellenofen 1 weist einen Ofenraum 10, genauer einen Mikrowellenraum auf. In dem Mikrowellenraum 10 ist der Muffelofeneinsatz 2 vorgesehen. Der Muffelofeneinsatz 2 ist aus einem hitzebeständigen und feuerfesten Werkstoff hergestellt, wie beispielsweise Keramik oder Schamotte. Um den Muffelofeneinsatz 2 sicher in dem Mikrowellenraum 10 vorzusehen, ist dieser vorzugsweise wenigstens auf der Rückseite und an den beiden Seitenwänden fixiert.

Des Weiteren weist der Ofen 1 eine Heizvorrichtung auf, um zu behandelnde Proben zu erwärmen. Diese Heizvorrichtung kann thermische Heizstrahlelemente umfassen. Ist der Ofen 1 als Mikrowellenofen ausgebildet, ist die Heizvorrichtung als eine Vorrichtung zum Einkoppeln von Mikrowellen in den Mikrowellenraum 10 ausgebildet. Diese Vorrichtung weist vorzugsweise ein die Mikrowellen erzeugendes Magnetron sowie eine Koppelöffnung zum Einkoppeln der erzeugten Mikrowellen in den Mikrowellenraum 10. Zwischen Magnetron und Koppelöffnung kann ferner ein Hohlleiter vorgesehen sein sowie eine Abstrahlelement zum Abstrahlen der Mikrowellen.

Zwar zeigt das Ausführungsbeispiel der Figuren 1 und 2 einen Mikrowellenofen 1 sowie einen Muffelofeneinsatz 2. Die Erfindung ist jedoch nicht darauf beschränkt. So ist im Rahmen der Erfindung unter Mikrowellenofen 1 immer auch allgemein ein Ofen 1 mitzulesen. Der Muffelofeneinsatz 2 kann allgemein als feuerfester Einsatz 2 verstanden werden. Wird kein Mikrowellenofen 1 verwendet, so muss der Einsatz 2 auch nicht zwingend Mikrowellen-durchlässig ausgebildet sein. Im Folgenden wird somit von Mikrowellenofen 1, Muffelofeneinsatz 2 sowie Mikrowellenraum 10 gesprochen, wobei im Rahmen der Erfindung hierunter auch immer Ofen 1, feuerfester Einsatz 2 und Ofenraum 10 zu verstehen ist.

Der Mikrowellenofen 1 weist ferner eine Ofentür 11 auf. Diese ist derart vorgesehen, um den Mikrowellenraum 10 zu verschließen. Hierzu weist der Mikrowellenofen 1 vorzugsweise in bekannter Weise Ofenwände 12 auf, welche den Mikrowellenraum 10 vorzugsweise an fünf Seiten vollständig umgeben. Die sechste Seite des Mikrowellenraumes 10 weist eine Ofenöffnung 13 auf. Diese Ofenöffnung 13 kann mit der Ofentür 11 mikrowellendicht verschlossen (vgl. Pfeil P1 in Figur 1) werden. Hierzu ist die Ofentür 11 zwischen einer die Ofenöffnung 13 des Mikrowellenraums 10 verschließenden Betriebsposition (vgl. Figur 2) und einer die Ofenöffnung 13 freigebenden Öffnungsposition (vgl. Figur 1) bewegbar (vgl. Doppelpfeil P2 in Figur 2). Die Tür 11 ist hierzu vorzugsweise gelenkig an dem Mikrowellenofen 1 angebracht, also mittels eines Gelenks 14 schwenkbar an dem Mikrowellenofen 1, vorzugsweise an einer Seite der Ofenöffnung 13, angeordnet. Es sind jedoch auch andere bekannte Öffnungsvorrichtungen von der Erfindung umfasst. Zudem kann die Tür Vorrichtungen aufweisen, um diese automatisch zu öffnen oder zu schließen; beispielsweise eine elektronisch angesteuerte hydraulische Bewegungsvorrichtung.

Der Muffelofeneinsatz 2 umgibt einen Probenraum 20. Der Muffelofeneinsatz 2 weist hierzu Muffelofenwände 21 auf, welche den Probenraum an fünf, vorzugsweise an allen sechs Seiten umgeben. Eine Seite des Probenraumes 20 weist entweder keine Muffelofenwand 21 auf und bildet daher eine Probenraumöffnung 22 oder eine der Muffelofenwände 21 weist die Probenraumöffnung 22 auf. Diese Probenraumöffnung 22 ist zur Ofenöffnung 13 hin gerichtet; mit anderen Worten weist der Probenraum 20 zur Ofenöffnung 13 hin gerichtet eine Probenraumöffnung 22 auf, durch welche Proben in den Probenraum 20 hineingestellt und aus diesem wieder herausgenommen werden können. Die Probenraumöffnung 22 ist dabei derart groß zu wählen, dass die Proben (bspw. in Tiegeln oder sonstigen Gefäßen) dort hindurch passen; gegebenenfalls unter Verwendung einer Tiegelzange oder eines anderen Handlingwerkzeugs.

Vorzugsweise erstreckt sich von dem Probenraum 22 durch eine Wand 21 des Muffelofeneinsatzes 2, durch den Mikrowellenraum 10 sowie durch eine Wand 12 des Mikrowellenofens 1 eine Absaugvorrichtung 6. Diese ist vorzugsweise als Absaugrohr ausgebildet, welches den Probenraum 22 mit der Umgebung des Systems verbindet. An dem Auslass 60 der Absaugvorrichtung 6 außerhalb des Systems ist vorzugsweise eine Pumpe zum Entfernen der Verbrennungsgase und bei Bedarf zum Auffangen und vorzugsweise Reinigen der aus dem Probenraum abgesaugten Luft vorgesehen. Über die Absaugvorrichtung 6 können somit beispielsweise bei einer im Probenraum 22 stattfinden Probenbehandlung entstehende (Pyrolyse-)Gase vorzugsweise mittels Unterdruck aus dem Probenraum 22 sicher abgesaugt und aufgefangen werden und gelangen somit nicht in die Umgebung oder in Kontakt mit der Heizvorrichtung, wo es an kühleren Stellen zu Ablagerungen von Pyrolyse-Produkten kommen kann.

Des Weiteren ist eine feuerfeste Probenraumtür bzw. Muffelofentür 3 vorgesehen. Die Muffelofentür 3 ist vorzugsweise auch aus feuerfestem und besonders vorzugsweise ebenfalls Mikrowellen-durchlässigem (Isolations-)Material hergestellt, wie auch der Muffelofeneinsatz 2. Das Material des Muffelofeneinsatzes 2 sowie der Muffelofentür 3 ist vorzugsweise ähnlich ausgebildet oder identisch. Die Muffelofentür 3 ist derart ausgebildet, dass sie die Probenraumöffnung 22 vollständig abdecken kann und somit den Probenraum 20 in einer Schließposition der Muffelofentür 3 sicher (und dicht) verschließt. Zum Verschließen der Probenraumöffnung 22 kann die Muffelofentür 3 eine die Probenraumöffnung 22 in Betriebsposition seitlich umgebende vorzugsweise plane Anlagefläche 30 aufweisen, welche in der Betriebsposition mit einer der Ofenöffnung 13 zugewandten und vorzugsweise planen Anlagefläche 23 des Muffelofeneinsatzes 2 korrespondiert und folglich zusammenwirkt, vorzugsweise dichtend zusammenwirkt. Hierzu erstreckt sich die Muffelofentür 3 seitlich über die Probenraumöffnung 22 hinaus, ist also vorzugsweise rings um die Probenraumöffnung 22 herum größer ausgebildet als die Proberaumöffnung 22. Durch die beiden korrespondierenden Anlageflächen 23, 30 wird ein großflächiger Kontaktbereich zwischen Muffelofentür 3 und Muffelofeneinsatz 2 bereitgestellt, der aufgrund der großen Planflächen eine besonders gute und dichte Anlage der Bauteile ermöglicht und somit den Probenraum 20 sicher nach außen abschließt.

Die Muffelofentür 3 ist derart mit der Ofentür 11 verbunden, dass die Muffelofentür 3 die Probenraumöffnung 22 des Muffelofeneinsatzes 2 in der Betriebsposition der Ofentür 11 (vgl. Figur 2) verschließt und in der Öffnungsposition der Ofentür 11 (vgl. Figur 1) freigibt. Mit anderen Worten sind Muffelofentür 3 und Ofentür 11 miteinander verbunden, so dass durch Schließen der Ofentür 11 und somit Verschließen des Mikrowellenraumes 10 gleichzeitig auch die Muffelofentür 3 geschlossen und somit der Probenraum 22 dicht abgeschlossen wird.

Um eine sichere Anlage der mit der Ofentür 11 verbundenen Muffelofentür 3 zu gewährleisten, ist die Muffelofentür 3 vorzugsweise derart mit der Ofentür 11 verbunden, dass die Muffelofentür 3 die Probenraumöffnung 22 des Muffelofeneinsatzes 2 in der Betriebsposition der Ofentür 11 in Richtung des Muffelofeneinsatzes 2 vorgespannt dicht verschließt und in der Öffnungsposition der Ofentür 11 freigibt. Mit anderen Worten ist die Muffelofentür 3 derart mit der Ofentür 11 verbunden, dass die Muffelofentür 3 von der Ofentür 11 weg und in der Betriebsposition in Richtung des Muffelofeneinsatzes 2 vorgespannt ist, um die Probenraumöffnung 22 des Muffelofeneinsatzes 2 in der Betriebsposition der Ofentür 11 dicht zu verschließen.

Hierzu kann die Muffelofentür 3 vorzugsweise elastisch mit der Ofentür 11 verbunden sein, so dass sie wenigstens in der Betriebsposition auch elastisch (also vorzugsweise federnd) in Richtung des Muffelofeneinsatzes 2 gegen diesen vorgespannt ist. Durch eine elastische Vorspannung wird gewährleistet, dass der Anpressdruck der Muffelofentür 3 gegen den Muffelofeneinsatz 2, vorzugsweise der beiden Anlageflächen 23, 30, konstant aufrechterhalten bleiben kann, auch wenn Abrieb zwischen diesen Teilen aufgrund von häufigem Öffnen und Schließen der Türen 3, 11 stattgefunden hat.

Um die Vorspannung der Muffelofentür 3 in der Betriebsposition in Richtung des Muffelofeneinsatzes 2 zu erzielen, sind vorzugsweise Vorspannelemente 5 zwischen der Ofentür 11 und der Muffelofentür 3 angeordnet. Diese Vorspannelemente drücken die Muffelofentür 3 folglich in Richtung weg von der Ofentür 11 und spannen diese somit gegen den Muffelofeneinsatz 2 in der Betriebsposition vor. Vorzugsweise weisen die Vorspannelemente 5 Federn oder Gummielementen, vorzugsweise Silikon-Gummi-Elemente, auf. Die Vorspannelemente sollten aus einem Material hergestellt sein, welches den im Mikrowellenraum 10 auftretenden Temperaturen bei einer Probenbehandlung standhält. So kann die Muffelofentür 3, mit der die Vorspannelemente 5 in direktem Kontakt sind, bei hohen Einsatztemperaturen im Probenraum 20 bis über 200°C heiß werden. Somit sollten die Vorspannelemente 5 für Temperaturen von über 200°C, vorzugsweise für Temperaturen von über 400°C ausgelegt sein. Werden andere Heizelemente als Mikrowellenstrahlung verwendet, können die Temperaturen auch noch höher sein. Federn könnten daher aus einer entsprechenden Stahllegierung hergestellt sein. Alternativ können auch Gummi-Elemente beispielsweise aus Silikonmaterial - vorzugsweise als elastische Rohre (Schläuche) oder Vollkörper - vorgesehen werden. Die Vorspannelemente 5 sind folglich elastisch ausgebildet und sorgen für eine elastische Vorspannung der Muffelofentür 3. Wird diese in Anlage mit dem Muffelofeneinsatz 2 gebracht, drücken die (elastischen) Vorspannelemente 5 die Muffelofentür 3 fest und dicht an den Muffelofeneinsatz 2. Je nachdem, wie groß der Schließweg der Ofentür 11 von der ersten Anlage der Muffelofentür 3 mit dem Muffelofeneinsatz 2 bis zum endgültigen Schließen der Ofentür 11 sowie die Federkraft der Vorspannelemente ausgebildet ist, so bestimmt sich der Anpressdruck, den die Vorspannelemente 5 auf die Muffelofentür 3 in Richtung des Muffelofeneinsatzes 2 ausüben.

In einer besonders vorzugsweisen Ausgestaltungsform sind die Vorspannelemente 5 entweder austauschbar vorgesehen und/oder in ihrer Federkraft bzw. ihrem Widerstand einstellbar ausgebildet. Somit kann zum einen ein defektes Vorspannelement 5 einfach ausgetauscht werden. Zum anderen wird es ermöglicht, dass der Anpressdruck je nach Wunsch und Probenbehandlungsverfahren sowie der Behandlungsparameter individuell eingestellt werden kann. Der Federweg beträgt vorzugsweise 0,5-50mm, vorzugsweise 1-20mm, je nach Anforderung. Dieser kann vorzugsweise wahlweise eingestellt werden, indem beispielsweise Vorspannelemente 5 mit unterschiedlichen Federwegen bereitgestellt werden, welche wahlweise vorgesehen werden können.

Um die Muffelofentür 3 sicher in bzw. an der Ofentür 11 aufzunehmen, kann ferner ein Profilelement 4 an der in Betriebsposition dem Mikrowellenraum 10 zugewandten Seite der Ofentür 11 vorgesehen sein, um die Muffelofentür 3 aufzunehmen. Das Profilelement 4 ist vorzugsweise aus Metall hergestellt; beispielsweise als einteiliges Stanz-Biege-Teil aus einem Blech und ist mit der Ofentür 11 (Mikrowellentür) leitend verbunden (verschweißt).

In einer bevorzugten Ausgestaltungsform weist die Muffelofentür 3 eine sich seitlich von dieser erstreckende Anlagefläche 31 auf. Diese kann beispielsweise durch sich seitlich von der Muffelofentür 3 erstreckende Haltebereiche 32 gebildet werden, wie in Figur 1 gezeigt. Die Anlagefläche 31 bzw. Haltebereiche 32 erstrecken sich vorzugsweise entlang zweier gegenüberliegender Seiten der Muffelofentür 3, vorzugsweise entlang wenigstens dreier (aneinander angrenzender) Seiten. Das Profilelement 4 ist vorzugsweise derart ausgebildet, dass es die wenigstens eine sich seitlich von der Muffelofentür 3 erstreckende Anlagefläche 31 bzw. den Haltebereich 32 hintergreift, um die Muffelofentür zu halten.

Die Muffelofentür 3 kann des Weiteren so ausgebildet sein, dass die sich seitlich erstreckenden Haltebereiche 32 mit die Anlagefläche 30 bildenden Bereichen 34 der Muffelofentür 3 eine seitliche bzw. laterale Nut 33 einschließen. Das Profilelement 4 ist dann vorzugsweise derart ausgebildet, dass es in die wenigstens eine laterale oder wenigstens teilweise umlaufende, seitliche Nut 33 der Muffelofentür 3 eingreift. Vorzugsweise teilweise umlaufend bedeutet, dass die Nut 33 sich vorzugsweise entlang wenigstens zweier, vorzugsweise wenigstens dreier aneinandergrenzender Seiten der Muffelofentür 3 durchgehend erstreckt.

Die Muffelofentür 3 kann entweder in dem Profilelement 4 integriert aufgenommen sein; beispielswiese indem die die Muffelofentür 3 hintergreifenden Bereiche 42 des Profilelements 4 um die Haltebereiche 32 gebogen werden. Insbesondere wenn die Haltebereiche 32 an zwei gegenüberliegenden oder drei aneinander angrenzenden Seiten der Muffelofentür 3 vorgesehen sind, kann die Muffelofentür 3 auch in das Profilelement 4 eingehängt werden; vorzugsweise lose aufgenommen werden. Dies ist insbesondere deswegen vorteilhaft, da somit die Muffelofentür 3 nach Bedarf (bei Verschleiß oder Verwendung eines anderen Muffelofeneinsatzes 2) ausgewechselt werden kann.

Vorzugsweise weist das Profilelement 4 eine C-Profilform im Querschnitt auf, wie dies in Figur 2 zu erkennen ist. In diesem Fall ist der Verbindungsschenkel 40 an der Ofentür 11 lösbar (bspw. Mittels Schrauben) oder unlösbar angebracht. Die sich von dem Verbindungsschenkel 40 weg erstreckenden Schenkel 41, 41 weisen vorzugsweise an ihrem dem Verbindungsschenkel 40 abgewandten Ende ein Halteelement 42, 42 zum Aufnehmen und vorzugsweise losen Halten der Muffelofentür 3. Diese Halteelemente 42 können bspw. sich von dem Ende des jeweiligen Schenkels 41 zu dem jeweils anderen Schenkel 41 hin erstreckende Schenkelbereiche sein, wie dies in den Figuren 1 und 2 gezeigt ist. Diese Schenkelbereiche 42 können dann die Haltebreiche 32 hintergreifen bzw. in die Nut 33 eingreifen.

Auch wenn zuvor ein bevorzugtes Ausführungsbeispiel eines Profilelements 4 sowie dessen Zusammenspiel mit der Muffelofentür 3 beschrieben ist, so ist die Erfindung nicht auf eine derartige Ausgestaltung beschränkt, solange sie die vorzugsweise lose Aufnahme der Muffelofentür 3 ermöglicht.

Es wurde bereits beschrieben, dass vorzugsweise zwischen Ofentür 11 und Muffelofentür 3 Vorspannelemente 5 angeordnet sind, um die Muffelofentür 3 in der Betriebsposition in Richtung des Muffelofeneinsatzes 2 vorzuspannen. Ist die Muffelofentür 3 in einem Profilelement 4 aufgenommen, so können die Vorspannelemente 5 zwischen Ofentür 11 und Muffelofentür 3 in dem Profilelement 4 angeordnet sein, genauer in einem durch das Profilelement 4 und die Muffelofentür 3 begrenzten Raum 43, wie dies in Figur 2 gezeigt ist. Dabei stützen sich die Vorspannelemente 5 vorzugsweise an der Ofentür 11 bzw. dem Verbindungsschenkel 40 des Profilelements 4 ab. In einer Öffnungsposition der Ofentür 11 wird die Muffelofentür 3 somit vorzugsweise entgegen dem Profilelement 4 vorgespannt; genauer gegen die Schenkelbereiche 42 gedrückt und in Anlage gehalten. Auf diese Weise wird die Muffelofentür 3 auch in einer Öffnungsposition der Ofentür 11 sicher in dem Profilelement 4 gehalten, auch wenn die Muffelofentür 3 beispielsweise nur über zwei gegenüberliegenden Haltebereiche 32 abgestützt wird, wie in Figur 1 gezeigt. In einer Betriebsposition sorgen die durch die Anlage der Muffelofentür 3 an dem Muffelofeneinsatz 2 dann weiter komprimierten Vorspannelemente 5 für eine sichere, feste und dichte Anlage der Muffelofentür 3 an dem Muffelofeneinsatz 2, um die Probenraumöffnung 22 sicher zu verschließen.

Wie bereits erwähnt, ist die Muffelofentür 3 vorzugsweise lose in dem Profilelement 4 aufgenommen. Darunter ist im Rahmen der Erfindung besonders vorzugsweise zu verstehen, dass zwischen dem Profilelement 4, insbesondere dem jeweiligen Schenkel 41 des Profilelements 4 sowie der entsprechend dem Schenkel 41 zugewandten Seite der Muffelofentür 3, welche die Haltebereiche 32 ausbildet, ein definierter Spalt 35 vorgesehen ist, der ein seitliches Spiel der Muffelofentür 3 zulässt. Dieses Spiel 35 erlaubt eine begrenzte seitliche Bewegung der Muffelofentür 3 in Bezug auf das Profilelement 4. Das Profilelement 4 kann dann auch als Führungselement bezeichnet werden.

Dies ist insbesondere dann vorteilhaft, wenn die Muffelofentür 3 in Bezug auf die Probenraumöffnung 22 ausgerichtet, vorzugsweise zentriert werden soll, um die Muffelofentür 3 mittig auf der Probenraumöffnung 22 zu platzieren. Die Zentrierung (Anpassung, Justage) erfolgt vorzugsweise durch den losen Andruck der Federelemente innerhalb des Führungsprofils 4 und dem Spiel automatisch beim ersten Schließvorgang. So kann die Probenraumöffnung 22 sicher verschlossen und die Anlageflächen 23, 30 in feste Anlage gebracht werden, wenn sich die Ofentür 11 in Betriebsposition befindet.

Um ein Zentrieren der Muffelofentür 3 zu ermöglichen, erstreckt sich von der der Ofentür 11 abgewandten Seite der Muffelofentür 3 vorzugsweise eine sich von der Muffelofentür 3 weg verjüngende Zentriererhebung 36. Diese Zentriererhebung 36 weist eine mit der Probenraumöffnung 22 korrespondierende Kontur beziehungsweise einen im Wesentlichen identischen Querschnitt auf; wenigstens in einem Fußbereich 360 der Zentriererhebung 36. Vorzugsweise weist die Zentriererhebung 36 eine kegelstumpfförmige oder pyramidenstumpfförmige Form auf. Beim Schließen der Muffelofentür 3 (also beim Schließen der Ofentür 11 bzw. wenn die Ofentür 11 in ihre Betriebsposition gebracht wird), greift die Zentriererhebung 36 in die Probenraumöffnung 22 ein. Aufgrund ihrer sich verjüngenden Form wird zunächst das verjüngte Ende 361 in die Probenraumöffnung 22 eingefahren. Ist die Muffelofentür 3 nicht zentriert, kommt die Seitenwand 362 der Zentriererhebung 36 mit der Probenraumöffnung 22 in Kontakt und drückt die Muffelofentür 3 während sie in Schließposition gebracht wird in eine bezüglich der Probenraumöffnung 22 zentrierten Position. Somit wird die Muffelofentür 3 beim Schließen des Muffelofeneinsatzes 2 bezüglich des Muffelofeneinsatzes 2 zentriert und vorzugsweise relativ zum Profilelement bzw. Führungselement 4 zentrieren. Da zwischen Profilelement bzw. Führungselement 4 und Muffelofentür 3 ein seitliches Spiel 35 besteht, kann die Muffelofentür 3 um den Betrag, der für die Zentrierung derselben notwendig ist, seitlich bewegt werden. Das Profilelement bzw. Führungselement 4 sorgt somit für eine ausreichende Führung der Muffelofentür 3 während eines Zentriervorganges beim Schließen der Ofentür 11 und somit gleichzeitig der Muffelofentür 3.

Im Folgenden wird ein Verfahren zum sicheren Schließen eines Mikrowellenofens 1 mit Muffelofeneinsatz 2 bzw. ein Verfahren zum Behandeln von Proben in einem entsprechenden Ofen 1 beschrieben.

Zunächst werden die Ofentür 11 und die Muffelofentür 3 miteinander verbunden, wenn dies noch nicht geschehen ist. Hierzu wird die Muffelofentür 3 vorzugsweise lose in ein an der Ofentür 11 befestigtes Profilelement 4 aufgenommen. Zwischen Ofentür 11 und Muffelofentür 3, vorzugsweise in dem Profilelement 4, sind vorzugsweise Vorspannelemente 5 bspw. in Form von Federn oder Silikon-Gummi-Elementen vorgesehen bzw. vorzusehen, welche die Muffelofentür 3 in einer Öffnungsposition vorzugsweise gegen das Profilelement 4 und in einer Betriebsposition in Richtung des Muffelofeneinsatzes 2 vorspannen, vorzugsweise elastisch vorspannen. In den Mikrowellenraum 20 ist des Weiteren ein Muffelofeneinsatz 2 vorzusehen, soweit dieser noch nicht dort angeordnet ist. Der Muffelofeneinsatz 2 ist dabei wenigstens auf der Rückseite und den beiden Seitenwänden zu fixieren, um ein Verschieben nach der automatischen Zentrierung zu vermeiden. Die Probenraumöffnung 22 des Muffelofeneinsatzes 2 ist in Richtung der Ofenöffnung 13 ausgerichtet. Dann wird die Ofentür 11 geschlossen, wobei die Muffelofentür 3 vorzugsweise mit seiner Anlagefläche 30 in Anlage mit dem Muffelofeneinsatz 2, vorzugsweise dessen Anlagefläche 23, kommt und bedeckt die Probenraumöffnung 22. Wird die Ofentür 11 ganz geschlossen, also in Betriebsposition gebracht, so werden die Vorspannelemente 5 weiter komprimiert (elastisch zusammengedrückt) und drücken die Anlageflächen 23, 30 fest gegeneinander. Somit wird die Muffelofentür 3 sicher geschlossen und der Probenraum 20 ist sicher und dicht verschlossen. Wenigstens beim ersten Schließen kann die Muffelofentür 3 zudem justiert bzw. zentriert werden. Hierzu weist diese eine Zentriererhebung 36 auf, welche eine sich von der Muffelofentür 3 weg verjüngende Form aufweist. Die Zentriererhebung 36 sorgt für eine automatische Selbstzentrierung der Muffelofentür 3 gegenüber der Probenraumöffnung 22, indem die Zentriererhebung 36 sich beim Einfahren in die Probenraumöffnung 22 über ihre Seitenwänden 262 an dem Muffelofeneinsatz 2 im Bereich der Probenraumöffnung 22 abstützt und somit die Muffelofentür 3 bewegt und mittig zur Probenraumöffnung 22 ausrichtet. Auf diese Weise kann der Austausch oder die Montage der Muffelofentür 3 erleichtert werden.

Da die Muffelofentür 3 nicht mehr separat gehandhabt werden muss, kann das Öffnen und Schließen der Ofentür 11 sowie der Muffelofentür 3 gleichzeitig über nur einen Griff 15 des Mikrowellenofens 1 durchgeführt werden. Da es sich bei dem Griff 15 um einen außerhalb des Systems, also außerhalb des Probenraumes 20 und des Mikrowellenraumes 10, liegenden Handgriff 15 handelt, ist dieser auch nicht den Temperaturen in dem Mikrowellenofen 1 ausgesetzt und kann folglich auch ohne Isolationshandschuhe betätigt werden. Somit kann der Anwender mit der freien Hand in einer Öffnungsposition der Ofentür 11 Proben in den Probenraum 20 hineinstellen oder aus dem Probenraum 20 herausnehmen.

Die Erfindung ist nicht auf die vorhergehenden Ausführungsbeispiele beschränkt, solange sie vom Gegenstand der folgenden Ansprüche umfasst ist. Es wird nochmals darauf hingewiesen, dass anstelle eines Mikrowellenofens 1 immer auch ein Ofen im Allgemeinen verstanden werden kann. Dieser hat dann anstelle eines Mikrowellenraumes einen Ofenraum. Anstelle der Vorrichtung zum Erzeugen und Einkoppeln von Mikrowellen kann dann auch eine andere Heizvorrichtung, wie Heizstrahlelemente, verwendet werden. Der Muffelofeneinsatz ist dann allgemein als feuerfester Einsatz zu verstehen, welcher dann nicht zwingend Mikrowellen-durchlässig sein muss.

Die Erfindung ist zudem nicht auf die beschriebenen Materialien des Mikrowellenofens 1, des Muffelofeneinsatzes 2, der Muffelofentür 3, des Profilelements 4 oder der Vorspannelemente 5 beschränkt, soweit diese für die beschriebene Anwendung einsetzbar sind. Auch sind die Dimensionen und Federwege des Systems nicht begrenzend. Des Weiteren sind auch andere Vorspannelemente denkbar, insofern sie den auftretenden Temperaturen standhalten.

## Patentansprüche

1. Mikrowellenofen (1) mit feuerfestem und Mikrowellen-durchlässigem Muffelofeneinsatz (2), aufweisend:
einen Mikrowellenraum (10), in welchem der einen Probenraum (20) umgebende Muffelofeneinsatz (2) vorgesehen ist,
eine Vorrichtung zum Einkoppeln von Mikrowellen in den Mikrowellenraum (10), und
eine Ofentür (11) zum Verschließen des Mikrowellenraums (10), welche zwischen einer eine Ofenöffnung (13) des Mikrowellenraums (10) verschließenden Betriebsposition und
einer die Ofenöffnung (13) freigebenden Öffnungsposition bewegbar ist,
wobei eine Muffelofentür (3) derart mit der Ofentür (11) vorzugsweise elastisch verbunden ist, dass die Muffelofentür (3) eine Probenraumöffnung (22) des Muffelofeneinsatzes (2) in der Betriebsposition der Ofentür (11) verschließt und in der Öffnungsposition der Ofentür (11) freigibt.

2. Mikrowellenofen (1) mit feuerfestem und Mikrowellen-durchlässigem Muffelofeneinsatz (2), aufweisend:
einen Mikrowellenraum (10), in welchem der Muffelofeneinsatz (2) vorgesehen ist,
eine Vorrichtung zum Einkoppeln von Mikrowellen in den Mikrowellenraum (10), und
eine Ofentür (11) zum Verschließen des Mikrowellenraums (10), welche zwischen einer eine Ofenöffnung (13) des Mikrowellenraums (10) verschließenden Betriebsposition und
einer die Ofenöffnung (13) freigebenden Öffnungsposition bewegbar ist,
wobei der Muffelofeneinsatz (2) einen Probenraum (20) umgibt, welcher zur Ofenöffnung (13) hin gerichtet eine Probenraumöffnung (22) aufweist,
**dadurch gekennzeichnet, dass**
eine Muffelofentür (3) derart mit der Ofentür (11) vorzugsweise elastisch verbunden ist, dass die Muffelofentür (3) die Probenraumöffnung (22) des Muffelofeneinsatzes (2) in der Betriebsposition der Ofentür (11) vorzugsweise elastisch in Richtung des Muffelofeneinsatzes (2) vorgespannt dicht verschließt und in der Öffnungsposition der Ofentür (11) freigibt.

3. Mikrowellenofen (1) nach Anspruch 1 oder 2, wobei ein Profilelement (4) an der in Betriebsposition dem Mikrowellenraum (10) zugewandten Seite der Ofentür (11) vorgesehen ist, um die Muffelofentür (3) vorzugsweise lose aufzunehmen,
wobei das Profilelement (4) vorzugsweise wenigstens eine sich seitlich von der Muffelofentür (3) erstreckende Anlagefläche (31) hintergreift, besonders vorzugsweise ist das Profilelement (4) derart ausgebildet ist, dass es in wenigstens eine laterale oder wenigstens teilweise umlaufende, seitlich Nut (33) der Muffelofentür (3) eingreift, ganz besonders vorzugsweise weist das Profilelement (4) eine C-Profilform auf.

4. Mikrowellenofen (1) nach einem der vorhergehenden Ansprüche, wobei Vorspannelemente (5) zwischen Ofentür (11) und Muffelofentür (3) angeordnet sind, um die Muffelofentür (3) in der Betriebsposition in Richtung des Muffelofeneinsatzes (2) vorzuspannen,
wobei die Vorspannelemente (5) vorzugsweise zwischen Ofentür (11) und Muffelofentür (3) in dem Profilelement (4) angeordnet sind, so dass die Muffelofentür (3) in der Öffnungsposition der Ofentür (11) entgegen dem Profilelement (4) vorgespannt ist, und
wobei die Vorspannelemente (5) vorzugsweise Federn oder Gummielementen, besonders vorzugsweise Silikon-Gummi-Elemente, aufweisen.

5. Mikrowellenofen (1) nach einem der vorhergehenden Ansprüche, wobei sich von der der Ofentür (11) abgewandten Seite der Muffelofentür (3) eine sich von der Muffelofentür (3) weg verjüngende Zentriererhebung (36) erstreckt, die derart ausgebildet ist, dass sie in der Betriebsposition in die Probenraumöffnung (22) eingreift um die Muffelofentür (3) beim Schließen des Muffelofeneinsatz (2) bezüglich des Muffelofeneinsatzes (2) zu zentrieren und vorzugsweise relativ zum Profilelement seitlich zu bewegen,
wobei die Zentriererhebung (36) vorzugsweise eine mit der Probenraumöffnung (22) korrespondierende Kontur bzw. Querschnittsform aufweist, besonders vorzugsweise eine kegelstumpfförmige oder pyramidenstumpfförmige Form aufweist.

6. Mikrowellenofen (1) nach einem der vorhergehenden Ansprüche, wobei die Muffelofentür (3) zum Verschließen der Probenraumöffnung (22) eine die Probenraumöffnung (22) in Betriebsposition seitlich umgebende vorzugsweise plane Anlagefläche (23) aufweist, welche in der Betriebsposition mit einer der Ofenöffnung (13) zugewandten und vorzugsweise planen Anlagefläche (30) des Muffelofeneinsatzes (3) vorzugsweise dichtend zusammenwirkt.

7. Ofen (1) mit feuerfestem Einsatz (2), aufweisend:
einen Ofenraum (10), in welchem der Einsatz (2) vorgesehen ist,
eine Heizvorrichtung, und
eine Ofentür (11) zum Verschließen des Ofenraumes (10), welche zwischen einer eine Ofenöffnung (13) des Ofenraums (10) verschließenden Betriebsposition und einer die Ofenöffnung (13) freigebenden Öffnungsposition bewegbar ist,
wobei der Einsatz (2) einen Probenraum (20) umgibt, welcher zur Ofenöffnung (13) hin gerichtet eine Probenraumöffnung (22) aufweist, und
wobei eine feuerfeste Probenraumtür (3) derart mit der Ofentür (11) verbunden ist, dass die Probenraumtür (3) die Probenraumöffnung (22) des Einsatzes (2) in der Betriebsposition der Ofentür (11) verschließt und in der Öffnungsposition der Ofentür (11) freigibt,
**dadurch gekennzeichnet, dass**
die Probenraumtür (3) derart mit der Ofentür (11) vorzugsweise elastisch verbunden ist, dass die Probenraumtür (3) von der Ofentür (11) weg und in der Betriebsposition vorzugsweise elastisch in Richtung des Einsatzes (2) vorgespannt ist, um die Probenraumöffnung (22) des Einsatzes (2) in der Betriebsposition der Ofentür (11) dicht zu verschließen.

8. Ofen (1) mit feuerfestem Einsatz (2), aufweisend:
einen Ofenraum (10), in welchem der Einsatz (2) vorgesehen ist,
eine Heizvorrichtung, und
eine Ofentür (11) zum Verschließen des Ofenraumes (10),
welche zwischen einer eine Ofenöffnung (13) des Ofenraums (10) verschließenden Betriebsposition und einer die Ofenöffnung (13) freigebenden Öffnungsposition bewegbar ist,
wobei der Einsatz (2) einen Probenraum (20) umgibt, welcher zur Ofenöffnung (10) hin gerichtet eine Probenraumöffnung (22) aufweist, und
wobei eine Probenraumtür (3) derart mit der Ofentür (11) verbunden ist, dass die Probenraumtür (3) die Probenraumöffnung (22) des Einsatzes (2) in der Betriebsposition der Ofentür (11) verschließt und in der Öffnungsposition der Ofentür (11) freigibt,
**dadurch gekennzeichnet, dass**
sich von der der Ofentür (11) abgewandten Seite der Probenraumtür (3) eine sich von der Probenraumtür (3) weg verjüngende Zentriererhebung (36) erstreckt, die derart ausgebildet ist, dass sie in der Betriebsposition in die Probenraumöffnung (22) eingreift, um die Probenraumtür (3) beim Schließen des Einsatzes (2) bezüglich des Einsatzes (2) zu zentrieren.

9. Ofen (1) nach Anspruch 7 oder 8, wobei ein Profilelement (4) an der in Betriebsposition dem Ofenraum (10) zugewandten Seite der Ofentür (11) vorgesehen ist, um die Probenraumtür (3) vorzugsweise lose aufzunehmen,
wobei das Profilelement (4) vorzugsweise wenigstens eine sich seitlich von der Probenraumtür (3) erstreckende Anlagefläche (31) hintergreift, besonders vorzugsweise ist das Profilelement (4) derart ausgebildet ist, dass es in wenigstens eine laterale oder wenigstens teilweise umlaufende, seitlich Nut (33) der Probenraumtür (3) eingreift, ganz besonders vorzugsweise weist das Profilelement (4) eine C-Profilform auf.

10. Ofen nach einem der Ansprüche 7 bis 9, wobei sich von der der Ofentür (11) abgewandten Seite der Probenraumtür (3) eine sich von der Probenraumtür (3) weg verjüngende Zentriererhebung (36) erstreckt, die derart ausgebildet ist, dass sie in der Betriebsposition in die Probenraumöffnung (22) eingreift um die Probenraumtür (3) beim Schließen des Einsatzes (2) bezüglich des Einsatzes (2) zu zentrieren und vorzugsweise relativ zum Profilelement (4) seitlich zu bewegen.

11. Ofen (1) nach einem der Ansprüche 7 bis 10, wobei Vorspannelemente (5) zwischen Ofentür (11) und Probenraumtür (3) angeordnet sind, um die Probenraumtür (3) in der Betriebsposition in Richtung des Einsatzes (2) vorzuspannen,
wobei die Vorspannelemente (5) vorzugsweise zwischen Ofentür (11) und Probenraumtür (3) in dem Profilelement (4) angeordnet sind, so dass die Probenraumtür (3) in der Öffnungsposition der Ofentür (11) entgegen dem Profilelement (4) vorgespannt ist, und
wobei die Vorspannelemente (5) vorzugsweise Federn oder Gummielementen, besonders vorzugsweise Silikon-Gummi-Elementen, aufweisen.

12. Ofen (1) nach einem der Ansprüche 8 bis 11, wobei die Zentriererhebung (36) eine mit der Probenraumöffnung (22) korrespondierende Kontur bzw. Querschnittsform aufweist, vorzugsweise eine kegelstumpfförmige oder pyramidenstumpfförmige Form aufweist.

13. Ofen (1) nach einem der Ansprüche 7 bis 12, wobei die Probenraumtür (3) zum Verschließen der Probenraumöffnung (22) eine die Probenraumöffnung (22) in Betriebsposition seitlich umgebende vorzugsweise plane Anlagefläche (30) aufweist, welche in der Betriebsposition mit einer der Ofenöffnung (10) zugewandten und vorzugsweise planen Anlagefläche (23) des Einsatzes (2) vorzugsweise dichtend zusammenwirkt.

14. Ofen (1) nach einem der Ansprüche 7 bis 13, wobei der Ofen (1) ein Mikrowellenofen ist und die Heizvorrichtung eine Vorrichtung zum Einkoppeln von Mikrowellen in den als Mikrowellenraum ausgebildeten Ofenraum (10) aufweist, wobei der Einsatz (2) ferner Mikrowellen-durchlässig ist.

15. Ofen (1) nach einem der Ansprüche 7 bis 14, wobei der feuerfeste Einsatz (2) ein Muffel bzw. ein Muffelofeneinsatz ist.
